# EUROPEAN PATENT APPLICATION

(11) **EP 3 333 789 A1**
(43) Date of publication of application: **13.06.2018**
(21) Application number: 16203182.7
(22) Date of filing: 09.12.2016
(51) Int. Cl.: G06Q 20/32, G06Q 20/40

(54) **METHOD AND SYSTEM FOR TRANSACTION AUTHENTICATION**

(71) Applicant: Mastercard International Incorporated, New York, NY 10577 (US)
(72) Inventor: O'CUILINN, Niall, 16 Dublin (IE); WALSH, Vincent, 14 Dublin (IE)
(74) Representative: FRKelly

(57) **Abstract**

Provided are a computer-implemented method and system for determining the level of authentication required for a transaction, the method comprising operating a processor to: receive a transaction request associated with a payment card; compare geolocation data of the transaction request with geolocation data of a mobile device associated with a cardholder of the payment card; and based on the comparison, determine the level of authentication required for the transaction.

## Description

### Field of the Invention

The present disclosure relates to payment card authentication. More particularly, the present disclosure relates to a method and system for determining the level of authentication required for a payment card transaction.

### Background of the Disclosure

Typically consumers use cash, debit cards or credit cards when making purchases or conducting transactions in real or virtual retail outlets. Credit or debit cards are ubiquitous nowadays. Traditionally, to consummate a purchase transaction with such a card, the card is swiped through a magnetic stripe reader that is part of a point of sale (POS) terminal or is inserted into a chip reader. The account number is read by the reader from a magnetic stripe or chip present on the card. The account number is then used to route a transaction authorisation request that is initiated by the POS terminal. Card-based transactions are typically performed across multiple channels of commerce. For example, card-based transactions may be performed in person at a retail outlet, via a computer connected to the Internet, via a mobile device such as a smartphone and/or via a call centre.

Electronic commerce, such as online shopping, has been increasingly common since the beginning of the Internet. Online shopping websites generally provide a user interface for customers to select items or services for purchase. After the customer has selected items for purchase, the customer typically can choose from multiple payment/credit options to purchase the products. Two conventional payment/credit options supported by online merchants include using a financial account, for example, a credit card or current account, and using a third party payment service provider. The customer typically enters details of their credit or debit card in the user interface when purchasing items.

Lately, there has been growing interest in electronic or "cash-less" retail payment systems which do not rely on traditional credit or debit cards. Such systems can expedite payment. Electronic commerce transactions can be effected by using a digital wallet, which refers to an electronic device that allows an individual to make electronic purchases. This can include purchasing items on-line with a computer or using a mobile device to purchase something at a store. Increasingly, digital wallets are being made not just for basic financial transactions but also to authenticate the holder's credentials. For example, a digital wallet can be used to verify the age of the purchaser.

The ability to make payments using mobile devices provides a further advantage in that the consumer does not have to carry physical funding instruments, such as credit cards, cash, and debit cards. Conventional systems for making electronic retail payments include "contactless" credit and debit card systems, which are proprietary systems developed by banks and/or credit card companies that use electronically-equipped cards or other electronic devices capable of transmitting and receiving radio frequency (RF) signals. Such system provides cardholders with a more user-friendly means of completing a credit/debit transaction by bringing a contactless-enabled payment card or other payment device, such as a key fob, proximal to a point-of-sale terminal reader, rather than swiping or inserting a card.

In a typical transaction using a credit or debit card, a cardholder wishing to complete a transaction (or make a payment) provides a card number together with other card details (such as a card expiry date, card code verification (CCV) number etc.) to a merchant at a point of sale (POS). The merchant transmits the card number and the details to an 'acquirer', i.e. a financial institution that facilitates and processes card payments made to the merchant. The acquirer then transmits an authorization request via a payment card network to an issuer or provider of the card used to make the payment. An electronic transaction terminal may include a point of sale (POS), i.e., the location where a retail transaction takes place, or an automated teller machine (ATM) where a cardholder withdraws cash or conducts other transactions.

The issuer processes the received request and determines whether or not the request is allowable. If the issuer determines that the payment request is allowable, an authorization response is transmitted via the payment card network to the acquirer and transfer of the payment amount to the merchant's account is initiated.

Responsive to receiving the authorization response from the issuer, the acquirer communicates the authorization response to the merchant. In this manner, a card number may be used to effect a card payment to a merchant.

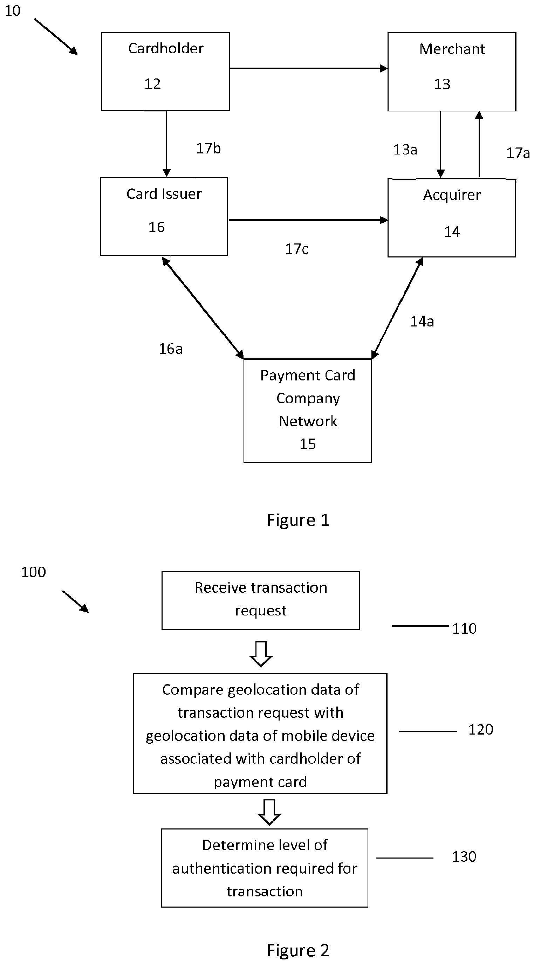

Figure 1 illustrates a payment card system 10 for conducting a typical transaction. Referring to Figure 1, a card holder 12 submits a payment card to a merchant 13. A POS device 13a is configured to communicate with an acquirer 14, which functions as a payment processor. The acquirer 14 initiates 14a a transaction on a payment card company network 15. The payment card company network 15, which may include a financial transaction processing company, routes 16a the transaction to a card issuer 16. The card issuer 16 may be identified using information in the transaction message. The card issuer 16 approves or denies an authorisation request, and then routes, via the payment card company network 15, an authorization response back to the acquirer 14. The acquirer 14 sends approval to the merchant 13 via the POS device 13a. If the transaction is approved, the card holder 12 completes the purchase and may receive a receipt. The transaction is subsequently cleared and settled resulting in the the account of the merchant 13 being credited 17a by the transaction amount and the account of the card holder 12 being debited by the transaction amount.

There are multiple different types of payment cards available on the market, and multiple ways to fund and effect the payment for goods. In some cases, a payment card may serve a specific purpose. For example, a payment card may be configured to enable a customer to make payments and/or withdraw cash in one or more foreign currencies. Additionally or alternatively, a payment card may be a virtual credit card enabling a user to purchase items whilst mitigating the risks associated with exposing the user's actual card number to the possibilities of credit card fraud. For example, the number of payments and/or the amount for which payments can be made using a virtual credit card may be limited.

Mobile wallet applications on a mobile device allow the user to select one of a plurality of stored cards in order to make a payment, as many consumers use more than one card in a given day.

Payment cards can facilitate the performing of transactions electronically. The customer may use a payment card in conjunction with a merchant's device (e.g. an electronic point of sale) to perform a transaction with the merchant. For example, the customer may wish to purchase goods or services from the merchant, and so the customer may use the payment card to transfer funds or payment into the merchant's account in exchange for receiving the goods or services from the merchant.

Card issuers, cardholders, merchants and acquirers incur large losses each year from payment card fraud. Fraud is particularly prevalent in the world of e-commerce where no payment card is presented for verification and the actual identity of the user performing the transaction is difficult, if not impossible, to verify.

Fraud mitigation or prevention measures may be employed. These include, for example, merchants requesting a payment card holder's address and payment card verification value (CVV) information to verify the identity of the payment card holder. However, this information may become compromised, thus reducing the efficacy of these additional pieces of information.

Another technique is for payment card companies to build detailed expensive models on payment card holder behaviour according to purchase patterns and geolocation movements, that is, places the payment card holder travels to. Such behaviour data may be compiled over time. The purchase models are used to detect fraud early and alert merchants and payment card holders. However, it may take a considerable period of time for a model to be built for each user, and sometimes false positives occur when a user breaks their pattern.

Many methods for authentication, verification and validation of user activity as well as for user identity are currently employed. Such technologies are employed, for example, when an individual engages in some transaction that requires some level of security. An automated financial transaction is a typical example of a secure transaction requiring mechanisms to authenticate, verify and validate the identity of the user attempting to perform the transaction. Examples of such transactions include banking functions, for example using payment cards at a POS to make a purchase, that require some form of authentication, verification and validation.

Methods of authenticating individuals attempting a secure transaction include use of PIN numbers or some other type of information that is assumed to be known only by an authorised user involved in the transaction. Documentation may also be used to verify identity, such as a driver's license or other form of photo identification Biometric devices, such as fingerprint scanners, may be used to authenticate an individual attempting to perform a secure transaction.

Many existing fraud detection and prevention technologies can provide a false positive indication of fraudulent activity. Apart from the above-mentioned technologies, other technologies may be employed such as behavioural profiling that is used to detect anomalous behaviour. Examples of such unusual activities are when an individual uses a payment card to purchase some product or service in a foreign country where they have never previously performed a similar transaction. In another example, the amount of a particular transaction may be significantly different from any previous transaction. This behaviour may appear anomalous to a fraud detection system and the activity or transaction being performed may be terminated before any potential fraud is perpetrated. If this actually a false positive indication and the individual is actually an authorised user, the user suffers the consequences of a failed transaction and the service provider is considered to have provided a poor quality of service.

As alluded to above, while using a payment card such as a credit card abroad to order delivery of an item to their current location, a card holder may experience a high level of step-up authentication and declined transactions. It can be frustrating for the cardholder that the purchasing experience abroad is not as convenient as at home. Card not present transactions are a major route for credit card fraud, because it is difficult for a merchant to verify that the actual cardholder is authorizing a purchase.

Accordingly, in view of the above, the problem being addressed by the present disclosure is the level of authentication required for payment card transactions, and for example the number of false positives resulting in a computerised system that prevent access to a service by a service user and the associated necessity for human intervention in an otherwise automated system.

### Summary of the Invention

The present disclosure provides a computer-implemented method as detailed in claim 1. Also provided are a computer-readable medium in accordance with claim 13 and a system according to claim 14. Certain exemplary, advantageous features are provided in dependent claims.

An authentication step up agent is configured to process online merchant checkout events prior to authorisation and to make a decision as to whether it is necessary to step up the authentication level on the transaction.

In one embodiment, a cardholder's information, including for example shipping address information, recorded at checkout may be compared with the last known geolocation information for a mobile device associated with the Primary Account Number (PAN) in question (if any).

Mobile Network Operators (MNOs) know the country or approximate location of a given mobile device using several methods: The mobile location of registered cardholders may be obtained through the use of MNO provided geolocation data. This information may be used to compare the cardholder's last known location against the delivery address on a card not present (CNP) transaction and provide increased confidence in a transaction where the card holder is currently travelling and ordering items online for delivery to their current location abroad.

If the location exists, an indication of the result of the match (successful or not) may be included as input to the confidence score decision logic. A match will improve confidence and reduce the need for authentication step up.

### Brief Description of the Drawings

Figure 1 illustrates a payment card system for conducting a typical transaction;
Figure 2 is a flowchart illustrating a method of determining the level of authentication required for a transaction, according to an embodiment of the present disclosure;
Figure 3 illustrates a payment card system for determining the level of authentication required for a transaction, according to an embodiment of the present disclosure;
Figure 4 is a diagram of a system for determining the level of authentication required for a transaction, according to an embodiment of the present disclosure;
Figure 5 is a flowchart illustrating a method of determining the level of authentication required for a transaction, according to an embodiment of the present disclosure;
Figure 6 is a block diagram illustrating a configuration of a computing system including various hardware and software components that function to perform the methods according to embodiments of the present disclosure.

### Detailed Description

The present disclosure provides a computer-implemented method and system for determining the level of authentication required for a transaction, for example for a card present (CP) transaction or a card not present (CNP) transaction. A card not present (CNP) transaction is a payment card transaction in which the cardholder does not or cannot physically present the card for a merchant's visual examination when a transaction request is provided and payment effected, such as for telephone or online transactions.

The computer-implemented method may be embodied as part of an application on a computerised fraud management system. By using for example the location of a cardholder's mobile device to validate the delivery address of a card not present (CNP) transaction, unnecessary step up authentication of online transactions while the card holder is abroad can be minimised.

Accordingly, the present disclosure provides a computer-implemented method for determining the level of authentication required for a transaction, the method comprising operating a processor to:
receive a transaction request associated with a payment card;
compare geolocation data of the transaction request with geolocation data of a mobile device associated with a cardholder of the payment card; and
based on the comparison, determine the level of authentication required for the payment transaction.

The method comprises determining whether it is necessary to step up the authentication level for the transaction prior to authorisation of the transaction.

In general, a payment card or data associated with a payment account may be provided to a merchant by a cardholder in order to fund a financial transaction, for example the purchase of goods or services, via by the associated payment account. Payment cards may include credit cards, debit cards, charge cards, stored-value cards, prepaid cards, fleet cards, virtual payment numbers, virtual card numbers, controlled payment numbers, etc. A payment card may be a physical card that may be provided to a merchant, or may be data representing the associated payment account.

Figure 2 is a flowchart illustrating a method 100 of determining the level of authentication required for a transaction, according to an embodiment of the present disclosure. Referring to Figure 2, the method 100 includes receiving a transaction request associated with a payment card 110, comparing geolocation data of the transaction request with geolocation data of a mobile device associated with a cardholder of the payment card 120, and based on the comparison, determining the level of authorisation required for the transaction 130. The payment card may be associated with a credit card account, a debit card account, a checking account, a savings account, or a loyalty rewards account

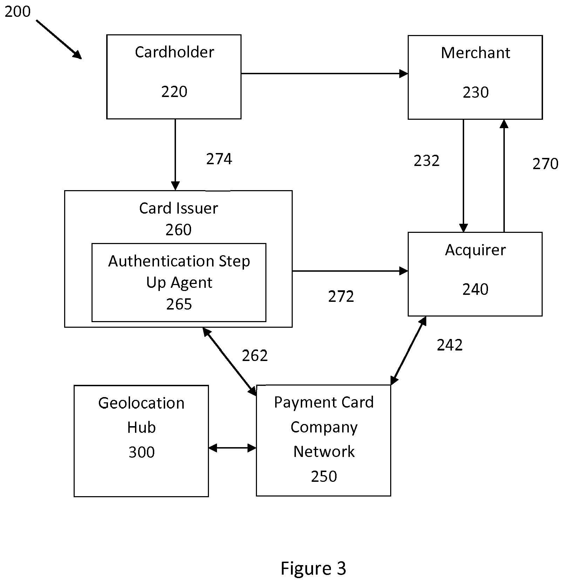

Figure 3 is a block diagram illustrating a payment card system 200 for determining the level of authentication required for transaction, according to an embodiment of the present disclosure. Referring to Figure 3, the payment card system 200 comprises a cardholder 220, a merchant 230, an acquirer 240, a payment card company network 250, and a card issuer 260. The card issuer 260 includes an authentication step up agent 265.

In a transaction, the card holder 220 submits a transaction request to the merchant 230. The transaction request may be a card present (CP) transaction request or a card not present (CNP) transaction request. The transaction request may comprise transaction information data regarding a transfer of ownership of goods, services or items from one party to another. For example, the transaction information data may comprise a bill of sale. The transaction information data may comprise data about the good/services for sale, an amount, one or more identifiers comprising an identifier of a payer device, an identifier of a payee device, and additional data. The payer device may comprise a physical terminal such as a portable computing device, for example a mobile device such as a laptop computer, a smartphone, or a tablet computer, or a desktop computer. The payee device may be a device associated with a merchant who may be providing goods or services for sale. The merchant or payee device may comprise a physical terminal such as a portable computing device (e.g. a laptop computer, a smartphone, a tablet computer etc.); a desktop computer; a Point of Sale (POS) or merchant terminal, for example located a terminal located at a physical point of sale such as a shop or restaurant, or an ATM. Alternatively, the merchant or payee device may be a terminal associated with a virtual Point Of Sale, e.g. a POS at which online purchases or payments may be made.

A POS device 232 is configured to communicate with the acquirer 240, which functions as a payment processor. The acquirer 240 initiates 242 a transaction with the payment card company network 250. The payment card company network 250, which may include a financial transaction processing company, routes 262 the transaction to the card issuer 260. The payment card company network 250 may comprise any network across which communications can be transmitted and received. For example, the payment card company network 250 may comprise a wired or wireless network. The payment card company network 250 may, for example, comprise one or more of: the Internet; a local area network; a mobile or cellular network; a mobile data network or any other suitable type of network. The card issuer 260 may be identified using information in the transaction message. The method of the present disclosure comprises determining whether it is necessary to step up the authentication level for the transaction prior to authorisation of the transaction.

After determining whether it is necessary to step up the authentication level for the transaction prior to authorisation of the transaction, the card issuer 260 approves or denies an authorisation request, and then routes, via the payment card company network 250, an authorization response back to the acquirer 240. The acquirer 240 sends approval to the merchant 230 via the POS device 232. If the transaction is approved, the card holder 220 completes the purchase and may receive a receipt. The account of the merchant 230 is credited 270 by the acquirer 240. The card issuer 260 pays 272 the acquirer 240. Finally, the card holder 220 pays 274 the card issuer 260.

The payment card system 200 is configured to communicate with a geolocation hub 300 of a mobile network operator. The geolocation hub 300 stores geolocation data relating to movement of mobile devices. The geolocation hub 300 maintains a database of registered mobile devices mapped to payment cards. That is, a primary account number (PAN) of a cardholder may be associated with a mobile device. The geolocation hub 300 is maintained by the mobile network operator, and stores records of a mobile device registered to a cardholder of the payment card. Geolocation data relating to a mobile device may thus be used to determine the location of the cardholder associated with that mobile device. As mentioned above, the method of the present disclosure comprises determining whether it is necessary to step up the authentication level for the transaction prior to authorisation of the transaction. The method comprises checking if the cardholder's registered mobile device is in the same location as a location associated with the transaction. The geolocation data used is from the cardholder's mobile device, provided via their mobile operator, or related third party. The geolocation hub 300 may store timing information related to the geolocation information, such as most recent geolocation information relating to the mobile device.

The transaction request may include geolocation data. The geolocation data may comprise card present (CP) geolocation data. For a CP transaction request, the geolocation data of the transaction request may comprise a location identifier of an electronic transaction terminal, such as POS location data or ATM location data. When the transaction request is a CNP transaction, the geolocation data of the transaction request may comprise shipping address information such as one or more shipping addresses, preferred shipping provider(s), and preferred shipping method(s), for example, ground, air, expedited, signature confirmation, or other shipping method.

The transaction request may also include transaction information data and payment information. The payment information may include information associated with the cardholder, such as name, contact information, for example, residential address, phone number, e-mail address, demographic information, or any other suitable information associated with the cardholder.

The transaction request may also comprise transaction information data regarding the transfer of ownership of goods, services or items from one party to another. The transaction information data may comprise data about the good/services for sale, an amount, one or more identifiers comprising an identifier of a payer device, an identifier of a payee device, and additional data.

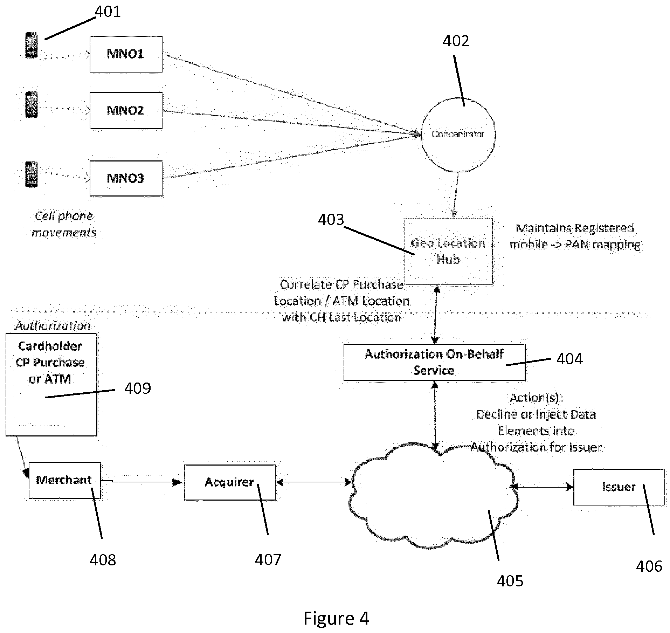

Figure 4 is a diagram illustrating a system for determining the level of authentication required for a transaction, according to an embodiment of the present disclosure. The example of Figure 4 relates to a card present (CP) transaction. Referring to Figure 4, movements MN01, MN02, and MN03 of a mobile device 401 such as a cell phone are monitored. Geolocation data relating to such movement is forwarded by a concentrator 402 and collated in a geolocation hub 403. The geolocation hub 403 is maintained by a mobile network operator of the mobile device 401 as described previously. The geolocation hub 403 stores records of a mobile device registered to a cardholder of the payment card. Geolocation data relating to a mobile device may thus be used to determine the location of the cardholder associated with that mobile device.

Referring to Figure 4, an acquirer 407 initiates a transaction with a payment card company network 405. The transaction may comprise a card present (CP) purchase at an electronic transaction terminal 409, such as an ATM transaction. The payment card company network 405, which may include a financial transaction processing company, routes the transaction to a payment card issuer 406. The payment card issuer 406 may be identified using information in the transaction message. The method of the present disclosure comprises determining whether it is necessary to step up the authentication level for the transaction prior to authorisation of the transaction. The determining step includes correlating geolocation data relating to the transaction request with the geolocation data of a mobile device associated with the cardholder. Referring back to Figure 4, an authentication step up agent 404 is configured to process transaction request events prior to authorisation and to make a decision as to whether it is necessary to step up the authentication level on the transaction. The authentication step up agent 404 may be configured to communicate with the geolocation hub 403 and process the correlation data. If the transaction is authorised, the authentication step up agent 404 is configured to maintain, reduce or increase the level of step-up authentication required according to the comparison process described above. The payment card issuer 406 approves or denies the authorisation request, and then routes, via the payment card company network 405, an authorization response back to the acquirer 407. The process then continues as described above.

After determining whether it is necessary to step up the authentication level for the transaction prior to authorisation of the transaction, the payment card issuer 406 approves or denies an authorisation request, and then routes, via the payment card company network 405, an authorization response back to the acquirer 407. The acquirer 407 sends approval to a merchant 408. If the transaction is approved, the card holder completes the purchase and may receive a receipt. The account of the merchant 408 is credited by the acquirer 407. The payment card issuer 406 pays the acquirer 407. Finally, the payment card holder pays the payment card issuer 406.

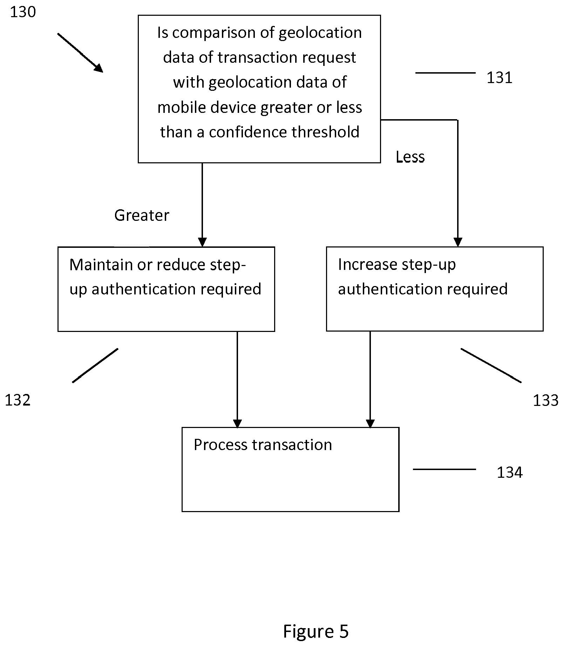

Figure 5 is a flowchart illustrating a method 130 of determining the level of authentication required for a transaction, according to an embodiment of the present disclosure. Referring to Figure 5, the method includes determining if a comparison of the geolocation data of the transaction request with geolocation data of a mobile device of the cardholder is greater or less than a confidence threshold 131. The confidence threshold is a metric used to determine whether more or less step-up authentication is required. The confidence threshold may vary according to location. For example, the confidence threshold may be set higher or lower according to the threat of payment card fraud associated with the country from which the transaction request is initiated. If the comparison of the geolocation data of the transaction request with the geolocation data of a mobile device of the cardholder returns a confidence score that is the same as or greater than a confidence threshold, a decision may be made to maintain or reduce the level of step-up authentication required 132.

In one example, a cardholder from the UK may be in Spain on holidays and wishes to conduct a CNP transaction. For example, the cardholder may wish to order an item online using their payment card and have the item delivered to an address in Spain. If the cardholder has a registered mobile device associated with their payment card, the last known geolocation data relating to the mobile device may indicate that the location of the cardholder is in Spain. Indeed, the last known geolocation data relating to the mobile device may correspond to the shipping address in Spain. Thus, in this example, a comparison of the transaction request with the geolocation data of the mobile device may return a confidence score greater than a confidence threshold. When the comparison of the transaction request with the geolocation data of the mobile device returns a confidence score that is greater than the confidence threshold, a decision may be made to maintain or reduce the level of step-up authentication required for the current transaction request.

On the other hand, if the comparison of the transaction request with the geolocation data returns a confidence score less than a confidence threshold, a decision may be made to increase the level of step-up authentication required 133. For example, a CNP transaction request may be initiated in Spain. The CNP transaction request may comprise shipping information indicating an address in Spain. The most recent geolocation data involving a mobile device associated with the payment card may indicate that the mobile device was in the UK at the time of initiating the transaction request. Thus, in this example, a comparison of the transaction request with the geolocation data of the mobile device may return a confidence score less than a confidence threshold. When the comparison of the transaction request with the geolocation data returns a confidence score that is less than the confidence threshold, a decision may be made to increase the level of step-up authentication required for the current transaction request.

Referring back to Figure 3, the authentication step up agent 265 is configured to process transaction request events prior to authorisation and to make a decision as to whether it is necessary to step up the authentication level on the transaction. If the transaction is authorised, the authentication step up agent 265 is configured to maintain, reduce or increase the level of step-up authentication required according to the comparison process described above. The card issuer 260 approves or denies the authorisation request, and then routes, via the payment card company network 250, an authorization response back to the acquirer 240. The process then continues as described above.

Examples of step-up authentication include:
- Secret questions that have been chosen and answered previously by the user.
- Out-of-band (OOB) authentication - via voice, SMS or e-mail.
- Knowledge-Based Authentication (KBA) - out of wallet questions that are obtained in real time from a series of public and private databases, the answers to which are known only by the user.
- Biometric authentication, e.g., fingerprint and eye biometrics
- Transaction signing: Provides integrity assurance, cryptographic signature and authenticity for payment transactions to mitigate against malware attacks. Transaction signing may integrate with biometric authentication as a stronger means of authentication with the payment transaction signature.

In one embodiment, shipping address information entered for a transaction request may be compared with last known geolocation information for the payment card, if any. If the last known geolocation information exists, an indication of the result of the match (successful or not) will be included as input to the confidence score decision logic. A match will improve confidence and reduce the need for authentication step up.

The method and system of the present disclosure minimizes the inconvenience experienced by cardholders when using their payment cards online from abroad, thereby providing increased customer satisfaction.

The present disclosure also provides a computer-implemented system for determining the level of authentication required for a transaction, the system comprising a processor configured to: receive a transaction request associated with a payment card; and compare geolocation data of the transaction request with geolocation data of a mobile device associated with a cardholder of the payment card; the system further comprising an authentication step up agent configured to determine the level of authentication required for the transaction based on the comparison.

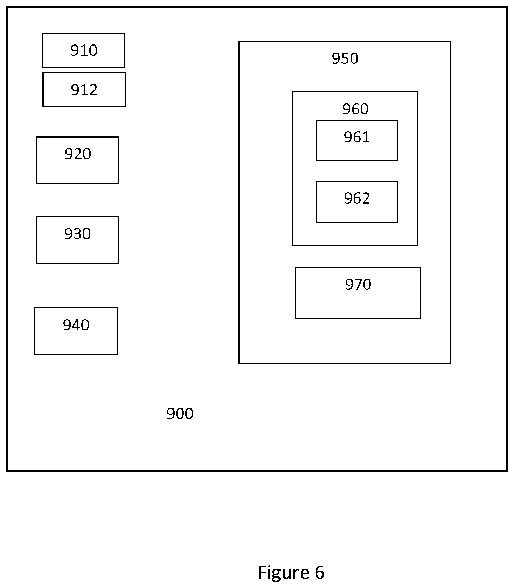

Figure 6 is a block diagram illustrating a configuration of a computing system 900 according to an embodiment of the present disclosure. The computing system 900 includes various hardware and software components that function to perform the methods according to the present disclosure. The computing system 900 may comprise one or more processors, and an authentication step up agent as described above. Referring to Figure 6, the computing system 900 comprises a user interface 910, a processor 920 in communication with a memory 950, and a communication interface 930. The processor 920 functions to execute software instructions that can be loaded and stored in the memory 950. The processor 920 may include a number of processors, a multi-processor core, or some other type of processor, depending on the particular implementation. The memory 950 may be accessible by the processor 920, thereby enabling the processor 920 to receive and execute instructions stored on the memory 950. The memory 950 may be, for example, a random access memory (RAM) or any other suitable volatile or nonvolatile computer readable storage medium. In addition, the memory 950 may be fixed or removable and may contain one or more components or devices such as a hard drive, a flash memory, a rewritable optical disk, a rewritable magnetic tape, or some combination of the above.

One or more software modules 960 may be encoded in the memory 950. The software modules 960 may comprise one or more software programs or applications having computer program code or a set of instructions configured to be executed by the processor 920. Such computer program code or instructions for carrying out operations for aspects of the systems and methods disclosed herein may be written in any combination of one or more programming languages.

The software modules 960 may be configured to be executed by the processor 920. During execution of the software modules 960, the processor 920 configures the system 900 to perform various operations relating to the facilitating and processing of transactions according to embodiments of the present disclosure, as has been described above.

Other information and/or data relevant to the operation of the present systems and methods, such as a transaction database 970, may also be stored on the memory 950. The transaction database 970 may contain and/or maintain various data items and elements that are utilized throughout the various operations of the system described above. The information stored in the database 970 may include but is not limited to, credit card details and billing information unique to the consumer and/or payment method, personal information for each consumer, banking information and a history of transactions by the consumer. One or more digital wallets may be stored in the transaction database 970. It should be noted that although the transaction database 970 is depicted as being configured locally to the computer system 900, in certain implementations the transaction database 970 and/or various other data elements stored therein may be located remotely. Such elements may be located on a remote device or server - not shown, and connected to the computer system 900 through a network in a manner known to those skilled in the art, in order to be loaded into a processor and executed.

Further, the program code of the software modules 960 and one or more computer readable storage devices (such as the memory 950) form a computer program product that may be manufactured and/or distributed in accordance with the present disclosure, as is known to those of skill in the art.

The communication interface 940 is also operatively connected to the processor 920 and may be any interface that enables communication between the computer system 900 and external devices, machines and/or elements as described above. The communication interface 940 is configured for transmitting and/or receiving data. For example, the communication interface 940 may include but is not limited to a Bluetooth, or cellular transceiver, a satellite communication transmitter/receiver, an optical port and/or any other such, interfaces for wirelessly connecting the computer system to the other devices, such as the geolocation hub described above.

The user interface 910 is also operatively connected to the processor 920. The user interface may comprise one or more input device(s) such as switch(es), button(s), key(s), and a touchscreen.

The user interface 910 functions to facilitate the capture of commands from the user such as an on-off commands or settings related to operation of the payment system.

A display 912 may also be operatively connected to the processor 920. The display 912 may include a screen or any other such presentation device that enables the user to view various options, parameters, and results. The display 912 may be a digital display such as an LED display. The user interface 910 and the display 912 may be integrated into a touch screen display.

The operation of the computer system 900 and the various elements and components described above will be understood by those skilled in the art with reference to the method and system for determining the level of authentication required for a transaction according to the present disclosure.

The present disclosure provides a method and system for determining the level of authentication required for a transaction. The method and system of the present disclosure minimises the inconvenience experienced by cardholders when using their payment cards online from abroad, thereby providing increased customer satisfaction.

The present disclosure is not limited to the embodiment(s) described herein but can be amended or modified without departing from the scope of the present disclosure. Additionally, it will be appreciated that in embodiments of the present disclosure some of the above-described steps may be omitted and/or performed in an order other than that described.

## Claims

1. A computer-implemented method for determining the level of authentication required for a transaction, the method comprising operating a processor to:
receive a transaction request associated with a payment card;
compare geolocation data of the transaction request with geolocation data of a mobile device associated with a cardholder of the payment card; and
based on the comparison, determine the level of authentication required for the transaction.

2. The method of claim 1, comprising determining whether it is necessary to step up the authentication level for the transaction prior to authorisation of the transaction.

3. The method of any preceding claim, comprising accessing the geolocation data of the mobile device from a geolocation hub maintained by a mobile network operator, the geolocation hub maintaining records of a mobile device registered to a cardholder of the payment card.

4. The method of any preceding claim, wherein the geolocation data of the mobile device comprises most recent known geolocation data of the mobile device.

5. The method of any preceding claim, comprising, if the level of the comparison returns a confidence score that is the same as or exceeds a confidence threshold, maintaining or reducing the level of step-up authentication required.

6. The method of any preceding claim, comprising, if the level of the comparison returns a confidence score that is less than a confidence threshold, increasing the level of step-up authentication required.

7. The method of any preceding claim, wherein the level of authentication comprises one or more of Out-of-band (OOB) authentication, Knowledge-Based Authentication (KBA), biometric authentication, and transaction signing.

8. The method of any preceding claim, wherein the payment card is associated with a credit card account, a debit card account, a checking account, a savings account, or a loyalty rewards account.

9. The method of any preceding claim, wherein the transaction request comprises a card present (CP) transaction at an electronic transaction terminal.

10. The method of claim 9, wherein the geolocation data of the transaction request comprises a location identifier of the electronic transaction terminal.

11. The method of any claims 1 to 8, wherein the transaction request comprises a card not present (CNP) transaction.

12. The method of claim 11, wherein the geolocation data of the transaction request comprises shipping address information associated with the transaction request.

13. A computer-readable medium comprising non-transitory instructions which, when executed, cause a processor to perform the method according to any one of claims 1 to 12.

14. A computer-implemented system for determining the level of authentication required for a transaction, the system comprising a processor configured to:
receive a transaction request associated with a payment card; and
compare geolocation data of the transaction request with geolocation data of a mobile device associated with a cardholder of the payment card; the system further comprising an authentication step up agent configured to
determine the level of authentication required for the transaction based on the comparison.

15. The system of claim 14, wherein the authentication step up agent is configured to determine whether it is necessary to step up the authentication level for the transaction prior to authorisation of the transaction.
